(19) Europäisches Patentamt
European Patent Office
Office européen des brevets

(11) **EP 3 623 586 B1**

(12) **EUROPEAN PATENT SPECIFICATION**

(45) Date of publication and mention of the grant of the patent:
**26.10.2022 Bulletin 2022/43**

(21) Application number: **19196803.1**

(22) Date of filing: **11.09.2019**

(51) International Patent Classification (IPC):
**F04D 29/32** *(2006.01)*

(52) Cooperative Patent Classification (CPC):
**F01D 17/162; F02C 9/20; F02K 3/075; F04D 29/323; F04D 29/56**

(54) **VARIABLE BYPASS RATIO FAN WITH VARIABLE PITCH AFT STAGE ROTOR BLADING**

GEBLÄSE MIT VARIABLEM NEBENSTROMVERHÄLTNIS MIT AFT-STAGE-ROTORBLÄTTERN MIT VARIABLEM ANSTELLWINKEL

SOUFFLANTE À RAPPORT DE DÉRIVATION VARIABLE DOTÉE D'UN AUBAGE DE ROTOR ARRIÈRE À PAS VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2018 US 201816128973**

(43) Date of publication of application:
**18.03.2020 Bulletin 2020/12**

(60) Divisional application:
**22191978.0**

(73) Proprietor: **Raytheon Technologies Corporation Farmington, CT 06032 (US)**

(72) Inventor: **FILIPENCO, Victor G. Portland, CT Connecticut 06480 (US)**

(74) Representative: **Dehns St. Bride's House 10 Salisbury Square London EC4Y 8JD (GB)**

(56) References cited:
**EP-A2- 3 460 201      JP-U- H0 566 253**
**US-A- 4 068 471       US-A- 4 080 785**
**US-A- 5 806 303       US-A1- 2005 244 269**

**Description**

**BACKGROUND**

A gas turbine aircraft propulsion engine typically includes a fan section, a compressor section, a combustor section, and a turbine section. In general, during operation, air is compressed in the fan and compressor sections and is mixed with fuel and burned in the combustor section to generate hot combustion gases. The hot combustion gases flow through the turbine section, which extracts energy from the hot combustion gases to power the compressor section, the fan section, and other gas turbine engine loads. Efficiency of the gas turbine engine may decrease if a decrease of the pressure ratio of the compressor section occurs.

US 4 080 785 A discloses a prior art gas turbine engine as set forth in the preamble of claim 1.

US 2005/244269 A1 discloses a prior art hybrid cycle high pressure compressor and a turbine engine including such a compressor.

US 4 068 471 discloses a prior art variable cycle engine with split fan section.

JP H05 66253 U discloses a prior art gas turbine engine.

US 5 806 303 A discloses a prior art turbofan engine with a core driven supercharged bypass duct and fixed geometry nozzle.

EP 3 460 201 A2 discloses a prior art variable stator vane rigging.

**SUMMARY**

From one aspect, there is provided a gas turbine engine as recited in claim 1.

In another aspect, there is provided a method of varying a bypass ratio of a gas turbine engine as recited in claim 8.

Features of embodiments of the invention are set forth in the dependent claims.

**BRIEF DESCRIPTION OF THE DRAWINGS**

Figure 1 illustrates an example gas turbine engine.

Figure 2 illustrates an enlarged view of a portion of the example gas turbine engine of Figure 1.

Figure 3 illustrates an enlarged view of another example fan section.

Figure 4 illustrates velocity triangles for a conventional approach for holding leading edge incidence as rotor inlet flow is varied at constant rotor speed.

Figure 5 illustrates velocity triangles and blade stagger angle settings for variable pitch aft Fan Rotor operation at "Low" and "High" bypass ratios.

**DETAILED DESCRIPTION**

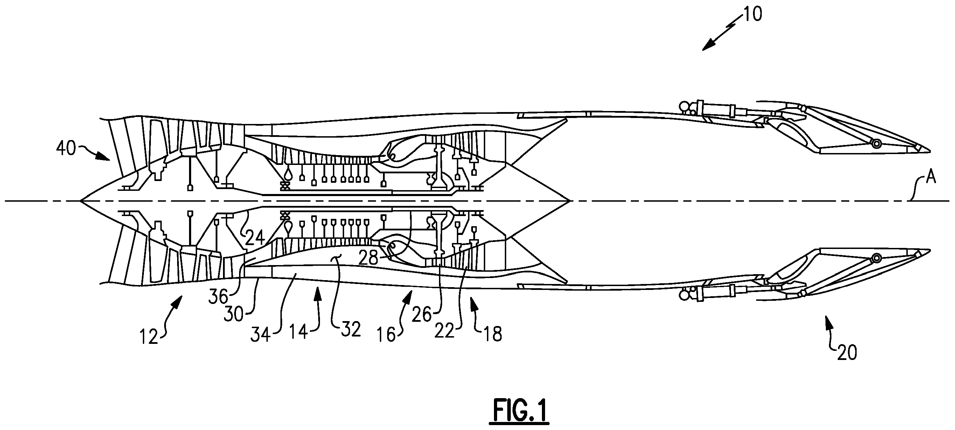

Figure 1 schematically illustrates a gas turbine engine 10. The gas turbine engine 10 is disclosed herein as a two-spool turbofan that generally incorporates a fan section 12, a compressor section 14, a combustor section 16, a turbine section 18, and a nozzle section 20. The sections are defined along a central longitudinal engine axis A.

The compressor section 14, the combustor section 16, and the turbine section 18 are generally referred to as the engine core. The fan section 12 and a low pressure turbine 22 of the turbine section 18 are coupled by a first shaft 24 to define a low spool. The compressor section 14 and a high pressure turbine 26 of the turbine section 18 are coupled by a second shaft 28 to define a high spool.

An outer engine case structure 30 and an inner engine structure 32 define a generally annular secondary flow path 34 around an inner flow path 36. It should be understood that various structure within the gas turbine engine 10 may define the outer engine case structure 30 and the inner engine structure 32 which essentially define an exoskeleton to support the core engine therein.

Air which enters the fan section 12 is divided between an inner flow through the inner flow path 36 and a secondary or bypass flow through the secondary flow path 34. The inner flow passes through the compressor section 14, the combustor section 16, the turbine section 18, and then through the nozzle section 20. The secondary flow may be utilized for a multiple of purposes to include, for example, cooling and pressurization. The secondary flow as defined herein is any flow different from the primary combustion gas exhaust core flow. The secondary flow passes through an annulus defined by the outer engine case structure 30 and the inner engine structure 32 then may be at least partially injected into the core flow adjacent the nozzle section 20.

The gas turbine engine 10 shown in Figure 1 operates on the Brayton thermodynamic cycle, the ideal thermodynamic efficiency of which depends only on the cycle pressure ratio as given by Equation 1:

$$\eta_{th} = 1 - \frac{1}{(\Pi_{overall})^{\frac{\gamma-1}{\gamma}}}$$

Equation (1)

As shown in Equation 1, the thermodynamic efficiency ($\eta_{th}$) of an engine, such as the gas turbine engine 10, operating on the Brayton cycle increases with increasing overall cycle pressure ratio ($\Pi_{overall}$) at a given ratio of specific heats ($\gamma=C_p/C_v$).

The overall pressure ratio of the gas turbine engine 10 corresponds to the ratio of a burner inlet total pressure at the combustor section 16 to an engine inlet total pressure and is generally equal to the product of the pressure ratios of the fan section 12 and compressor section 14. The pressure ratio of any additional compression stage or stages which may be disposed in series with the fan section 12 and the compressor section 14 would likewise multiplicatively affect the overall engine pressure ratio of the gas turbine engine 10.

Although the real gas turbine cycle efficiency is also a function of component efficiencies and other factors, the overall engine pressure ratio represents a dominant factor in the thermodynamic efficiency of engine 10. Therefore, any factor which may decrease the overall pressure ratio of engine 10 would generally decrease the thermodynamic efficiency of the gas turbine engine 10.

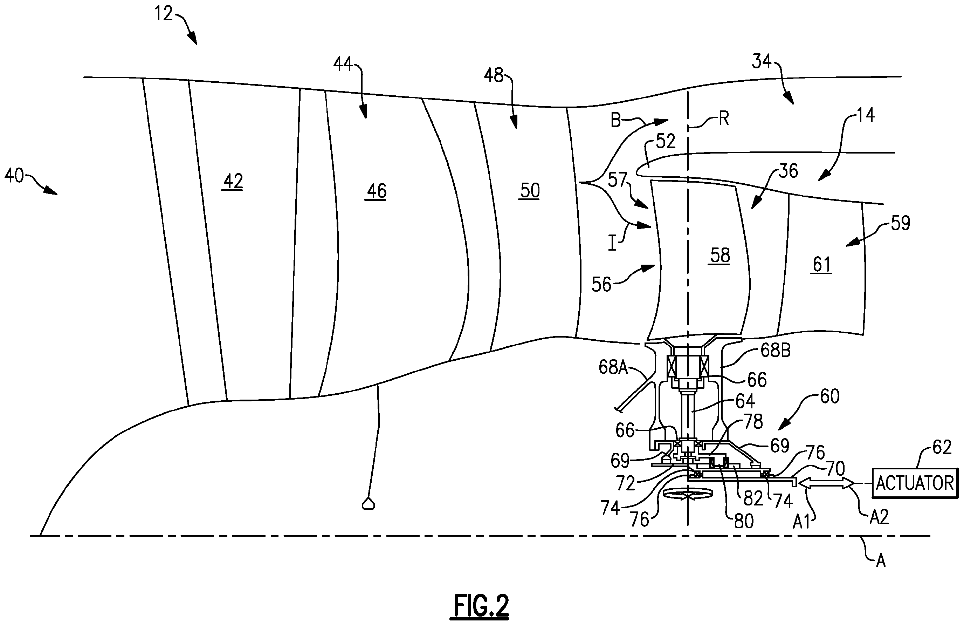

Figure 2 illustrates an enlarged view of the gas turbine engine 10. Air enters the gas turbine engine 10 through an inlet 40 to the fan section 12. Once the air enters the inlet 40, it passes over a plurality of inlet guide vanes 42 that are circumferentially spaced around an engine axis A, a single fan 44 having a row of a plurality of fan blades 46, and a fan stator 48 having a row of a plurality of vanes 50 immediately downstream of the single fan 44. In the illustrated example, the vanes 50 of the fan stator 48 are fixed from rotation and non-rotatable. In another example, each of the vanes 50 are rotatable about a separate axis transverse to the engine axis A to vary a pitch of the vanes 50.

As the air passes the fan stator 48, it reaches a splitter 52 where it is divided between bypass airflow B and inner airflow I. The bypass airflow B passes through the secondary flow path 34 located radially outward from the splitter 52 and is ejected out of an aft portion of the gas turbine engine 10. The inner airflow I passes through inner flow path 36 to variable blade pitch rotor 56 and stator 59 where its pressure is increased and then to compressor section 14 where it is further compressed before being heated in the combustor section 16 and expanded in the turbine section as discussed above (See Figures 1 and 2).

The inner flow path 36 includes a variable pitch rotor assembly 56 having a plurality of variable pitch blades 58 forming a row. A stator 59 is located immediately downstream of the variable pitch rotor assembly 56 and includes a plurality of vanes 61 forming a row. The variable pitch blades 58 of the variable pitch rotor assembly 56 are located immediately downstream of an inlet 57 to the inner flow path 36. The variable pitch blades 58 are rotatable about an axis of rotation R that is transverse or perpendicular to the engine axis A. As the variable pitch blades 58 rotate in unison about the axis of rotation R during operation, the corrected airflow rate through the inner flow path 36 and the secondary flow path 34 varies.

The variable pitch rotor assembly 56 may be located concentrically with and rotatable about engine centerline A and may be attached directly to the same shaft as fan blades 46 or may be driven through a gearbox off of the single fan 44 shaft or through a gearbox off of the high pressure spool of the engine or may be part of a separate engine spool independent of the fan and core spools.

During operation of the gas turbine engine 10, operating conditions may arise such that it is desirable to increase or decrease bypass airflow B in the secondary flow path 34 while simultaneously decreasing or increasing the flow in the inner flow path 36, respectively. When a lower bypass ratio for the gas turbine engine 10 is desired, for example at a fixed value of inlet airflow and rotor speed, which may be achieved in part by the closing of a variable nozzle at the exit of secondary flow path 34, an increase in airflow through the inner flow path 36 is required, corresponding to the decrease in bypass airflow through the secondary flow path 34. Concurrently with the increase in the air flow through the inner flow path 36, the variable pitch blades 58 are rotated to an increased pitch angle as required in order to maintain an optimum incidence angle on each of the variable pitch blades 58, thereby matching the flow capacity of the variable pitch rotor assembly 56 to the increase in airflow through the inner flow path 36 and maintaining the pressure ratio across the variable pitch rotor assembly 56.

Conversely, when an increase in the bypass ratio for the gas turbine engine 10 is desired, a reduction in airflow through the inner flow path 36 is required corresponding in magnitude to the increase in bypass airflow through the secondary flow path 34. Concurrently with the decrease in airflow through the inner flow path 36, the variable pitch blades 58 are rotated to a decreased pitch angle as required in order to maintain an optimum incidence angle on the variable pitch blades 58, thereby matching the flow capacity of the variable pitch rotor assembly 56 to the decrease in airflow through the inner flow path 36 and maintaining the pressure ratio across the variable pitch rotor assembly 56. Certain flight regimes require large changes in bypass ratio at high power.

The pressure ratio across the variable pitch rotor assembly 56 provides a significant contribution to the overall engine pressure ratio as described above and therefore by equation (1) to the overall cycle thermodynamic efficiency. For a constant-radius section through the variable pitch blade 58 from the leading edge to the trailing edge, it can be shown using Euler's turbine equation together with basic thermodynamic relationships that the pressure ratio across the rotor can be expressed as follows in Equation 2:

$$\left(\frac{Pt_2}{Pt_1}\right) = \left(\frac{U(C_{\theta 2} - C_{\theta 1})}{C_p T_{T1}} + 1\right)^{\frac{\gamma \eta_{poly,T-T}}{(\gamma - 1)}}$$

Equation (2)

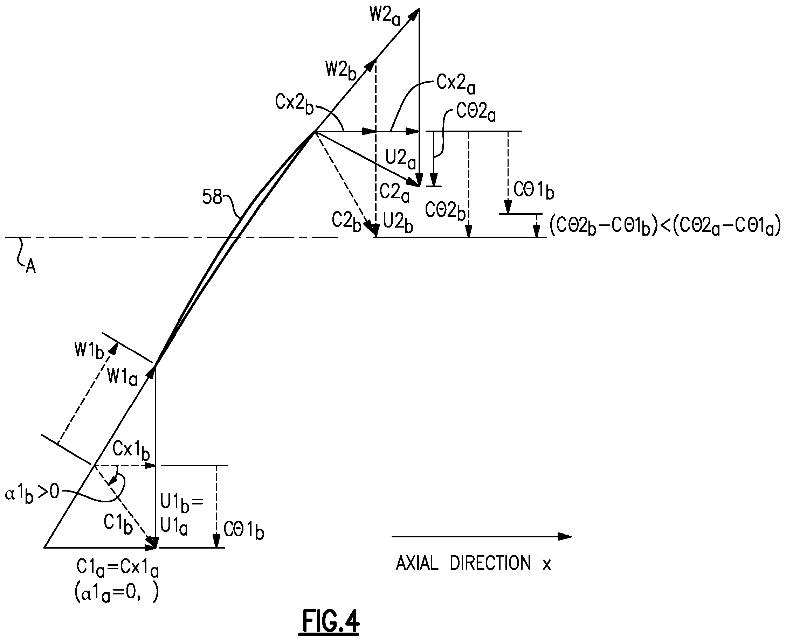

The conventional response to variations in rotor inlet flow coefficient $\varphi 1$ and thus to variations in the rotor inlet flow is to vary the angle of the upstream fan stator 48, thereby varying the swirl at the leading edge of a fixed pitch rotor which may be located at the same location in the engine as variable pitch rotor 56 as shown schematically in Figure 4. As the rotor $\varphi 1$ (flow coefficient) is decreased corresponding to a decrease in the rotor inlet flow and in Cx1 (air axial velocity) in the example given in Figure 4 where blade speed U is held constant (corresponding to for example a "high power" flight condition), the pre-whirl angle $\alpha 1$ must be increased in order to maintain an optimum leading edge rotor incidence angle as depicted by the dashed velocity triangle diagram in Figure 4.

Conversely, an increase in the rotor $\varphi 1$ (flow coefficient), corresponding to an increase in rotor inlet flow and therefore to an increase in Cx1 (air axial velocity), requires a decrease in the rotor inlet pre-whirl angle $\alpha 1$ with a corresponding decrease in circumferential velocity C$\theta 1$ (circumferential velocity at the leading edge of the rotor blades, to zero in the illustrative example given in Figure 4) in order to maintain an optimum rotor leading edge incidence as depicted by the solid velocity triangle diagram in Figure 4.

The required increase in C$\theta 1$ accompanying a decrease in rotor inlet flow at constant rotor blade speed U (corresponding to for example a high power engine operating condition) leads to a reduction in the change in absolute angular velocity across the rotor, i.e. to (C$\theta 2_b$ - C$\theta 1_b$) < (C$\theta 2_a$ - C$\theta 1_a$) as shown in the dashed and solid velocity triangle diagrams given in Figure 4, which by Equation (2) corresponds to a reduction in the rotor pressure ratio and therefore to the reduction of the overall cycle pressure ratio, and hence to a reduction in the engine thermodynamic efficiency as shown by Equation (1).

Conventional engines utilize a variable pitch upstream stator with a fixedpitch rotor in order to maintain an optimum rotor leading edge incidence in response to inlet flow variations as depicted schematically in Figure 4. The variable pitch rotor assembly 56 eliminates the requirement for any variability in the upstream swirl angle $\alpha 1$ introduced through a variable pitch stator. Instead, the variable pitch blades 58 stagger angle is varied as required in order to maintain the leading edge incidence at the optimum value in response to changes in the inlet flow coefficient $\varphi 1$ and hence to changes in the bypass ratio.

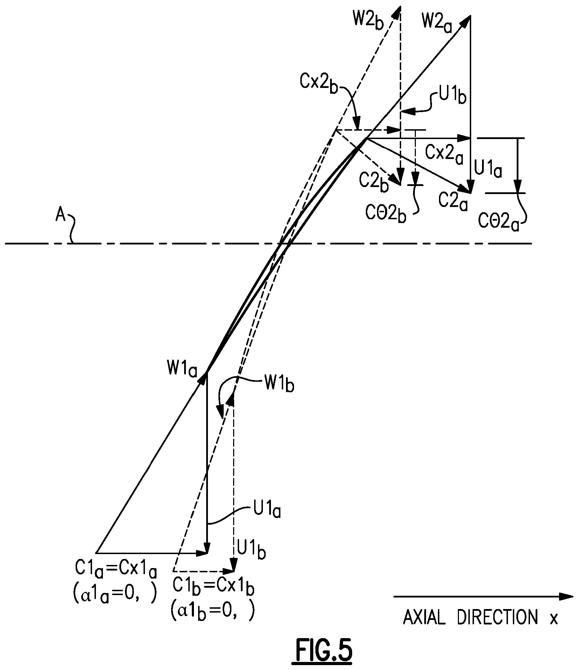

An advantage of the variable pitch rotor assembly 56 compared to a fixed blade pitch rotor is that the significant reduction in the rotor pressure ratio resulting from the increase in rotor pre-whirl which is required in response to a reduction in rotor inlet flow in order to maintain an optimum rotor leading edge incidence angle as described above and depicted schematically in Figure 4 may be greatly reduced or completely eliminated. This is demonstrated in Figure 5 in an example in which $\alpha 1$ (rotor pre-swirl angle) = 0 and hence C$\theta 1$ (circumferential velocity immediately upstream of the rotor) =0 at both high and low bypass conditions (achieved through a fixed upstream fan stator 48).

As shown in Figure 5, the variable blade pitch rotor velocity triangles may be configured such that the absolute tangential velocity, C$\theta 2$, at the exit of the variable pitch rotor assembly 56 remains essentially constant in response to the transition between the low bypass ("high" rotor inlet flow) operating condition depicted by the solid velocity triangles and the high bypass ("low" rotor inlet flow) operating condition, depicted by the dashed velocity triangles as the rotor blade stagger angle is adjusted in response to the rotor inlet flow variations as required in order to maintain an optimum rotor leading edge incidence.

As shown by Equation (2), the invariance of C$\theta 2$ in response to variations in bypass ratio corresponds to an invariance in the rotor pressure ratio for the example depicted in Figure 5, resulting in an overall cycle pressure ratio at high bypass conditions comparable to that at low bypass conditions. In contrast, the conventional method depicted in Figure 4 leads to a significant reduction in a rotor pressure ratio in response to an increase in bypass ratio. This would produce a decrease in the overall cycle pressure ratio and therefore a decrease in the thermodynamic efficiency of the conventional engine.

An additional advantage of the variable pitch rotor assembly 56 is that the variation of the angle of the absolute velocity vector C2 corresponding to a transition between operation at "low" and "high" bypass ratio is reduced as seen in Figure 5 (comparing the angle between C2b and C2a) in comparison to that seen in the fixed blade pitch configuration of Figure 4. The reduced variation in the angle of velocity vector C2 in response to transitions in the bypass ratio corresponds to a reduced leading edge incidence variation at the downstream stator 59. This facilitates operation closer to the condition of minimum loss in the downstream stator 59 over the full bypass ratio range as compared to the conventional configuration depicted in Figure 4.

As shown in Figure 2, the variable pitch blades 58 are rotated through an example non-limiting embodiment of a rotatable blade mechanism 60 connected with an actuator 62, such as a hydraulic actuator. However, other rotatable blade mechanisms and actuators could be used with this disclosure. Each of the variable pitch blades 58 include a spindle 64 rotatably supported on bearings 66 that are connected to a forward disk portion 68A and/or an aft disk portion 68B and to radially inner portions 69 of the rotatable blade mechanism 60.

The actuator 62 moves a slider 70 in either an axially forward direction A1 or an axially aft direction A2. The slider 70 is rotatably attached to a rotatable disk 72 through bearings 74. The slider 70 is fixed axially relative to the rotatable disk 72 with locks 76 abutting the bearings 74 and projections on both the slider 70 and the rotatable disk 72. A lever arm 78 is attached to a radially inner end of spindle 64 with a fastener and includes a slider projection 80 on a distal end of the lever arm 78. The slider projection 80 fits within a corresponding slot 82 in the rotatable disk 72. The slot 82 includes a directional component in an axial direction and in a tangential direction such that movement of the rotatable disk 72 in either the axially forward A1 or aft A2 direction causes the lever arm 78 to rotate the spindle 64 and the variable pitch blade 58 in the desired direction. Even though only a single rotatable blade mechanism 60 is shown in the illustrated example, a corresponding rotatable blade mechanism 60 associated with each of the variable pitch blades 58 circumferentially spaced around the engine axis A.

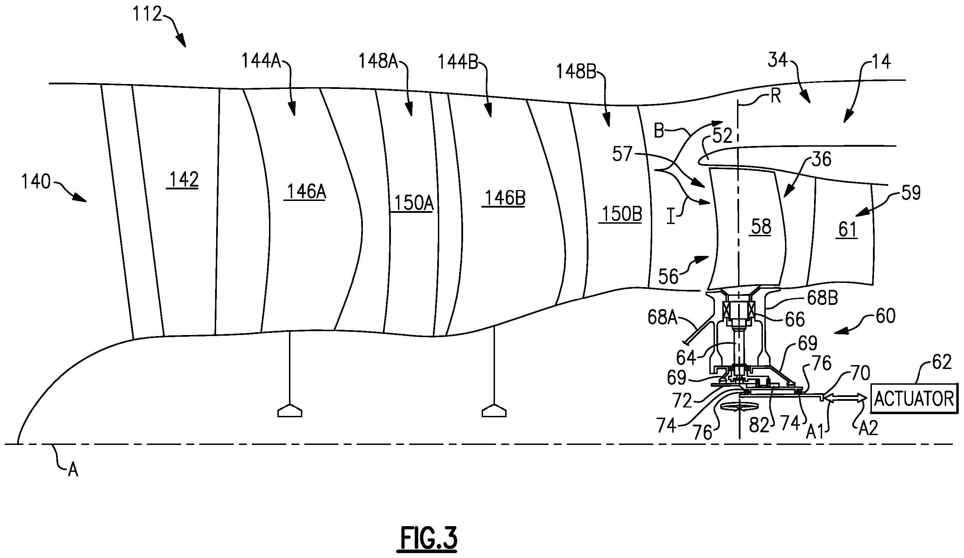

Figure 3 illustrates another example fan section 112 for the gas turbine engine 10. The fan section 112 is similar to the fan section 12 except where described below or shown in the Figures. Like numbers will be used to describe like or similar components. The fan section 112 is used in connection with the same compressor section 14 as described above.

Air enters the fan section 112 through an inlet 140. Once the air enters the inlet 40, it passes over a plurality of inlet guide vanes 142 that are circumferentially spaced around the engine axis A. Immediately downstream of the plurality of inlet guide vanes 142 is a forward fan row 144A having a plurality of fan blades 146A. The forward fan row 144A is separated from an aft fan row 144B having a plurality of fan blades 146B by a forward stator 148A having a plurality of vanes 150A forming a row. An aft stator 148B includes a plurality of vanes 150B and is located immediately downstream of the aft fan row 144B and immediately upstream of the splitter 52 and the variable pitch rotor assembly 56. In the illustrated example, the vanes 150B of the aft stator 148B are fixed from rotation and non-rotatable. In another example, each of the vanes 150B are rotatable about a separate axis transverse to the engine axis A.

As the air passes the fan stator 148B, it reaches the splitter 52 where it is divided between bypass airflow B through the secondary flow path 34 and inner airflow I through the inner flow path 36. The bypass airflow B travels through the secondary flow path 34 located radially outward from the splitter 52 and is ejected out of an aft portion of the gas turbine engine 10. The air entering the inner flow path 36 is further compressed in the variable blade pitch rotor 56 and compressor section 14 before being heated in the combustor section 16 and expanded in the turbine section 18 (See Figures 1 and 3).

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

**Claims**

1. A gas turbine engine (10) comprising:

    a fan section (12; 112);
    a splitter (52) downstream of the fan section (12; 112) at least partially defining a secondary flow path (34) on a radially outer side and an inner flow path (36) on a radially inner side; and

a variable pitch rotor assembly (56) located at an inlet to the inner flow path (36) including a plurality of variable pitch rotor blades (58),
**characterised in that**
the fan section (12; 112) includes at least one fan blade row (44; 144B) with a stator (48; 148B) including a row of a plurality of vanes (50, 150B) immediately downstream of the at least one fan blade row (44; 144B) and immediately upstream of the inner flow path (36) and of the variable pitch rotor assembly (56).

2. The gas turbine engine (10) of claim 1, wherein the plurality of variable pitch rotor blades (58) rotate about a rotor blade axis (R) that is transverse to an axis of rotation (A) of the gas turbine engine (10), wherein the rotor blade axis (R) is optionally perpendicular to the axis of rotation (A) of the gas turbine engine (10).

3. The gas turbine engine (10) of claim 1 or 2, wherein the fan section (112) includes more than one fan blade row (144A, 144B).

4. The gas turbine engine (10) of any preceding claim, further comprising an inlet guide vane (42; 142) immediately downstream of an inlet (40; 140) to the fan section (12; 112).

5. The gas turbine engine (10) of any preceding claim, wherein each of the plurality of variable pitch rotor blades (58) include a spindle (64) rotatably supported on at least one bearing (66).

6. The gas turbine engine of claim 5, wherein each of the spindles (64) are attached to a separate lever arm (78) that rotates the spindle (64) in response to movement from a hydraulic actuator (62).

7. The gas turbine engine (10) of any preceding claim, wherein the secondary flow path (34) is a bypass flow path (34).

8. A method of varying a bypass ratio of a gas turbine engine (10) comprising:

   driving a fan section (12; 112) with a turbine section (18), wherein the fan section (12; 112) directs air along a secondary flow path (34) and an inner flow path (36); and
   varying a pitch of a plurality of variable pitch rotor blades (58) in a variable pitch rotor assembly (56) in the inner flow path (36) in response to a change in the bypass ratio of the gas turbine engine (10),
   wherein the fan section (12; 112) includes at least one fan blade row (44; 144B) with a stator (48; 148B) including a row of a plurality of vanes (50, 150B) immediately downstream of the at least one fan blade row (44; 144B) and immediately upstream of the inner flow path (36) and of the variable pitch rotor assembly (56).

9. The method of claim 8, including maintaining a high pressure ratio across the plurality of variable pitch rotor blades (58) by varying the pitch of the plurality of variable pitch rotor blades (58).

10. The method of claim 8 or 9, wherein the variable pitch rotor assembly (56) is located in a compressor section (14) of the gas turbine engine (10).

11. The method of any of claims 8 to 10 including increasing the pitch of the plurality of variable pitch rotor blades (58) in response to a decrease in the bypass ratio of the gas turbine engine (10), wherein the pitch of the plurality of variable pitch rotor blades (58) is optionally varied with an actuator (62).

12. The method of any of claims 8 to 11, including decreasing the pitch of the plurality of variable pitch rotor blades (58) in response to an increase in the bypass ratio of the gas turbine engine (10), wherein the pitch of the plurality of variable pitch rotor blades (58) is optionally varied with an actuator (62).

13. The gas turbine engine (10) of any of claims 1 to 7 or the method of any of claims 8 to 12 wherein the vanes (50; 150B) of the vane row are not configured to rotate about an axis through a corresponding vane (50; 150B).

14. The gas turbine engine (10) of any of claims 1 to 7 or the method of any of claims 8 to 12, wherein the the vanes (50,150B) of the vane row are configured to rotate about an axis through a corresponding vane (50; 150B).

**Patentansprüche**

1. Gasturbinentriebwerk (10), umfassend:

   einen Gebläseabschnitt (12; 112);
   einen Teiler (52) stromabwärts des Gebläseabschnitts (12; 112), der mindestens teilweise einen sekundären Strömungsweg (34) auf einer radial äußeren Seite und einen inneren Strömungsweg (36) auf einer radial inneren Seite definiert; und
   eine Rotorbaugruppe (56) mit variablem Anstellwinkel, die an einem Einlass zu dem inneren Strömungsweg (36) angeordnet ist und eine Vielzahl von Rotorblättern (58) mit variablem Anstellwinkel umfasst,
   **dadurch gekennzeichnet, dass**
   der Gebläseabschnitt (12; 112) mindestens eine Gebläselaufschaufelreihe (44; 144B) mit einem Stator (48; 148B) beinhaltet, der eine Reihe einer Vielzahl von Leitschaufeln (50, 150B) unmittelbar stromabwärts der mindestens einen Gebläselaufschaufelreihe (44; 144B) und unmittelbar stromaufwärts des inneren Strömungswegs (36) und der Rotorbaugruppe (56) mit variablem Anstellwinkel beinhaltet.

2. Gasturbinentriebwerk (10) nach Anspruch 1, wobei die Vielzahl von Rotorblättern (58) mit variablem Anstellwinkel um eine Rotorblattachse (R) rotiert, die quer zu einer Rotationsachse (A) des Gasturbinentriebwerks (10) verläuft, wobei die Rotorblattachse (R) wahlweise senkrecht zur Rotationsachse (A) des Gasturbinentriebwerks (10) steht.

3. Gasturbinentriebwerk (10) nach Anspruch 1 oder 2, wobei der Gebläseabschnitt (112) mehr als eine Gebläselaufschaufelreihe (144A, 144B) enthält.

4. Gasturbinentriebwerk (10) nach einem der vorangehenden Ansprüche, ferner umfassend eine Einlassleitschaufel (42; 142) unmittelbar stromabwärts eines Einlasses (40; 140) zu dem Gebläseabschnitt (12; 112).

5. Gasturbinentriebwerk (10) nach einem der vorangehenden Ansprüche, wobei jedes der Vielzahl von Rotorblättern (58) mit variablem Anstellwinkel eine Spindel (64) beinhaltet, die drehbar auf mindestens einem Lager (66) gelagert ist.

6. Gasturbinentriebwerk nach Anspruch 5, wobei jede der Spindeln (64) an einem separaten Hebelarm (78) angebracht ist, der die Spindel (64) als Reaktion auf eine Bewegung von einem hydraulischen Aktor (62) dreht.

7. Gasturbinentriebwerk (10) nach einem der vorangehenden Ansprüche, wobei der sekundäre Strömungsweg (34) ein Umgehungsströmungsweg (34) ist.

8. Verfahren zum Verändern eines Umgehungsverhältnisses eines Gasturbinentriebwerks (10), umfassend:

   Antreiben eines Gebläseabschnitts (12; 112) mit einem Turbinenabschnitt (18), wobei der Gebläseabschnitt (12; 112) Luft entlang eines sekundären Strömungswegs (34) und eines inneren Strömungswegs (36) leitet; und
   Verändern eines Anstellwinkels einer Vielzahl von Rotorblättern (58) mit variablem Anstellwinkel in einer Rotorbaugruppe (56) mit variablem Anstellwinkel in dem inneren Strömungsweg (36) als Reaktion auf eine Änderung des Umgehungsverhältnisses des Gasturbinentriebwerks (10),
   wobei der Gebläseabschnitt (12; 112) mindestens eine Gebläselaufschaufelreihe (44; 144B) mit einem Stator (48; 148B) beinhaltet, der eine Reihe einer Vielzahl von Leitschaufeln (50, 150B) unmittelbar stromabwärts der mindestens einen Gebläselaufschaufelreihe (44; 144B) und unmittelbar stromaufwärts des inneren Strömungswegs (36) und der Rotorbaugruppe (56) mit variablem Anstellwinkel beinhaltet.

9. Verfahren nach Anspruch 8, umfassend Beibehalten eines hohen Druckverhältnisses über die Vielzahl von Rotorblättern (58) mit variablem Anstellwinkel hinweg durch Verändern des Anstellwinkels der Vielzahl von Rotorblättern (58) mit variablem Anstellwinkel.

10. Verfahren nach Anspruch 8 oder 9, wobei die Rotorbaugruppe (56) mit variablem Anstellwinkel in einem Verdichterabschnitt (14) des Gasturbinentriebwerks (10) angeordnet ist.

11. Verfahren nach einem der Ansprüche 8 bis 10, umfassend Erhöhen des Anstellwinkels der Vielzahl von Rotorblättern (58) mit variablem Anstellwinkel als Reaktion auf eine Verringerung des Umgehungsverhältnisses des Gasturbinentriebwerks (10), wobei der Anstellwinkel der Vielzahl von Rotorblättern (58) mit variablem Anstellwinkel wahlweise mit einem Aktor (62) verändert wird.

12. Verfahren nach einem der Ansprüche 8 bis 11, umfassend Verringern des Anstellwinkels der Vielzahl von Rotorblättern (58) mit variablem Anstellwinkel als Reaktion auf eine Erhöhung des Umgehungsverhältnisses des Gasturbinentriebwerks (10), wobei der Anstellwinkel der Vielzahl von Rotorblättern (58) mit variablem Anstellwinkel wahlweise mit einem Aktor (62) verändert wird.

13. Gasturbinentriebwerk (10) nach einem der Ansprüche 1 bis 7 oder Verfahren nach einem der Ansprüche 8 bis 12, wobei die Leitschaufeln (50; 150B) der Leitschaufelreihe nicht dazu konfiguriert sind, sich durch eine entsprechende Leitschaufel (50; 150B) um eine Achse zu drehen.

14. Gasturbinentriebwerk (10) nach einem der Ansprüche 1 bis 7 oder Verfahren nach einem der Ansprüche 8 bis 12, wobei die Leitschaufeln (50, 150B) der Leitschaufelreihe dazu konfiguriert sind, sich durch eine entsprechende Leitschaufel (50; 150B) um eine Achse zu drehen.

**Revendications**

1. Moteur à turbine à gaz (10) comprenant :

   une section de soufflante (12 ; 112) ;
   un séparateur (52) en aval de la section de soufflante (12 ; 112) définissant au moins partiellement un chemin d'écoulement secondaire (34) sur un côté radialement externe et un chemin d'écoulement interne (36) sur un côté radialement interne ; et un ensemble rotor à calage variable (56) situé au niveau d'une entrée du chemin d'écoulement interne (36) comportant une pluralité de pales de rotor à calage variable (58),
   **caractérisé en ce que**
   la section de soufflante (12 ; 112) comporte au moins une rangée de pales de soufflante (44 ; 144B) avec un stator (48 ; 148B) comportant une rangée d'une pluralité d'aubes (50, 150B) immédiatement en aval de l'au moins une rangée de pales de soufflante (44 ; 144B) et immédiatement en amont du chemin d'écoulement interne (36) et de l'ensemble rotor à calage variable (56).

2. Moteur à turbine à gaz (10) selon la revendication 1, dans lequel la pluralité de pales de rotor à calage variable (58) sont en rotation autour d'un axe de pale de rotor (R) qui est transversal à un axe de rotation (A) du moteur à turbine à gaz (10), dans lequel l'axe de pale de rotor (R) est facultativement perpendiculaire à l'axe de rotation (A) du moteur à turbine à gaz (10).

3. Moteur à turbine à gaz (10) selon la revendication 1 ou 2, dans lequel la section de soufflante (112) comporte plus d'une rangée de pales de soufflante (144A, 144B).

4. Moteur à turbine à gaz (10) selon une quelconque revendication précédente, comprenant en outre une aube guide d'entrée (42 ; 142) immédiatement en aval d'une entrée (40 ; 140) de la section de soufflante (12 ; 112).

5. Moteur à turbine à gaz (10) selon une quelconque revendication précédente, dans lequel chacune de la pluralité de pales de rotor à calage variable (58) comporte un arbre (64) porté de manière rotative sur au moins un palier (66).

6. Moteur à turbine à gaz selon la revendication 5, dans lequel chacun des arbres (64) sont fixés à un bras de levier séparé (78) qui met en rotation l'arbre (64) en réponse à un mouvement provenant d'un actionneur hydraulique (62).

7. Moteur à turbine à gaz (10) selon une quelconque revendication précédente, dans lequel le chemin d'écoulement secondaire (34) est un chemin d'écoulement de dilution (34).

8. Procédé de variation d'un taux de dilution d'un moteur à turbine à gaz (10), comprenant :

   l'entraînement d'une section de soufflante (12 ; 112) avec une section de turbine (18), dans lequel la section de soufflante (12 ; 112) dirige de l'air le long d'un chemin d'écoulement secondaire (34) et d'un chemin d'écoulement interne (36) ; et
   la variation d'un calage d'une pluralité de pales de rotor à calage variable (58) dans un ensemble rotor à calage variable (56) dans le chemin d'écoulement interne (36) en réponse à un changement dans le taux de dilution du moteur à turbine à gaz (10),
dans lequel la section de soufflante (12 ; 112) comporte au moins une rangée de pales de soufflante (44 ; 144B) avec un stator (48 ; 148B) comportant une rangée d'une pluralité d'aubes (50, 150B) immédiatement en aval de l'au moins une rangée de pales de soufflante (44 ; 144B) et immédiatement en amont du chemin d'écoulement interne (36) et de l'ensemble rotor à calage variable (56).

9. Procédé selon la revendication 8, comportant le maintien d'un taux de compression élevé sur la pluralité de pales de rotor à calage variable (58) en faisant varier le calage de la pluralité de pales de rotor à calage variable (58).

10. Procédé selon la revendication 8 ou 9, dans lequel l'ensemble rotor à calage variable (56) est situé dans une section de compresseur (14) du moteur à turbine à gaz (10).

11. Procédé selon l'une quelconque des revendications 8 à 10, comportant l'augmentation du calage de la pluralité de pales de rotor à calage variable (58) en réponse à une diminution dans le taux de dilution du moteur à turbine à gaz (10), dans lequel le calage de la pluralité de pales de rotor à calage variable (58) est facultativement varié avec un actionneur (62).

12. Procédé selon l'une quelconque des revendications 8 à 11, comportant la diminution du calage de la pluralité de pales de rotor à calage variable (58) en réponse à une augmentation dans le taux de dilution du moteur à turbine à gaz (10), dans lequel le calage de la pluralité de pales de rotor à calage variable (58) est facultativement varié avec un actionneur (62).

13. Moteur à turbine à gaz (10) selon l'une quelconque des revendications 1 à 7 ou procédé selon l'une quelconque des revendications 8 à 12, dans lequel les aubes (50 ; 150B) de la rangée d'aubes ne sont pas configurées pour être mises en rotation autour d'un axe par le biais d'une aube correspondante (50 ; 150B).

14. Moteur à turbine à gaz (10) selon l'une quelconque des revendications 1 à 7 ou procédé selon l'une quelconque des revendications 8 à 12, dans lequel les aubes (50 ; 150B) de la rangée d'aubes sont configurées pour être mises en rotation autour d'un axe par le biais d'une aube correspondante (50 ; 150B) .

FIG.1

**FIG.2**

EP 3 623 586 B1

EP 3 623 586 B1

**FIG.3**

FIG.4

EP 3 623 586 B1

AXIAL DIRECTION x

<u>FIG.5</u>

EP 3 623 586 B1

**REFERENCES CITED IN THE DESCRIPTION**

**Patent documents cited in the description**

- US 4080785 A
- US 2005244269 A1
- US 4068471 A
- JP H0566253 U
- US 5806303 A
- EP 3460201 A2